# EUROPEAN PATENT APPLICATION

(11) **EP 4 692 566 A1**
(43) Date of publication of application: **11.02.2026**
(21) Application number: 24193887.7
(22) Date of filing: 09.08.2024
(51) Int. Cl.: F15B 13/04, F15B 13/043, F15B 20/00, B64C 13/44

(54) **THREE-FUNCTION HYDRAULIC VALVE**

(71) Applicant: Microtecnica S.r.l., 10126 Turin (IT)
(72) Inventor: MORNACCHI, Andrea, 10126 Torino (IT); MOLINELLI, Dario, 20866 Carnate (IT)
(74) Representative: Casalonga

(57) **Abstract**

A valve for an actuator of a flight control surface is provided. The valve comprises an inner spool actuatable in a first direction and a second direction responsive to a first pressure differential between a first pressure chamber and a second pressure chamber, an outer spool actuatable in the first direction and second direction between an active position and a bypass position, an activation chamber for receiving hydraulic fluid, a bypass chamber for receiving hydraulic fluid, and a bypass spring. The inner spool is located within the outer spool. The outer spool is actuatable based upon forces from the bypass spring and a second pressure differential between the activation chamber and the bypass chamber.

## Description

### FIELD

The present disclosure relates to a valve for an actuator of a flight control surface and, particularly, to an integrated three function valve having a bypass function, a pressure relief function and a differential pressure sensing function.

### BACKGROUND

Flight control surfaces in fixed wing or rotary aircraft are typically actuated via hydraulic systems and in particular hydraulic actuators. To provide redundancy in the event that a hydraulic actuator fails, a flight control surface may be provided with two or more hydraulic actuators operating on the same flight control surface, e.g. operating in parallel or in a tandem configuration. Failure of one actuator therefore need not necessarily render the control surface inoperable as the remaining operable actuator may still actuate the control surface.

In the event that an actuator fails, for example if it loses hydraulic functionality, it is advantageous to hydraulically bypass the failed actuator such that the control surface can move freely, which in turn decreases the resistance the remaining actuator(s) must overcome to actuate the control surface. It is also advantageous to monitor differential pressure in the actuator e.g. in order to balance the force generated by each actuator, which can be useful to limit the deformations and stress of the wing surface and provide pressure relief when necessary to prevent damage to the flight control surface and the aircraft structure.

The present disclosure provides an improved valve for an actuator of a flight control surface. The valve provides the functions of differential pressure sensing, pressure relief and bypass into a single valve, sometimes termed as an integrated three function valve (ITFV).

### SUMMARY

In one aspect of the invention a valve for an actuator of a flight control surface is provided. The valve comprises an inner spool actuatable in a first direction and a second direction responsive to a first pressure differential between a first pressure chamber and a second pressure chamber, an outer spool actuatable in the first direction and second direction between an active position and a bypass position, an activation chamber for receiving hydraulic fluid, a bypass chamber for receiving hydraulic fluid, and a bypass spring. The inner spool is located within the outer spool. The outer spool is actuatable based upon forces from the bypass spring and a second pressure differential between the activation chamber and the bypass chamber.

In an optional embodiment of any of the aspects or embodiments described herein, the valve may comprise a pressure differential spring configured to bias the inner spool towards an equilibrium position.

In an optional embodiment of any of the aspects or embodiments described herein, the valve may comprise a position sensor configured to measure a position of the inner spool.

In an optional embodiment of any of the aspects or embodiments described herein, the inner spool may be actuatable in the first direction to a first pressure relief position responsive to the first pressure differential exceeding a first threshold.

In an optional embodiment of any of the aspects or embodiments described herein, the inner spool may be actuatable in the second direction to a second pressure relief position responsive to the first pressure differential exceeding a second threshold.

In an optional embodiment of any of the aspects or embodiments described herein, the valve may comprise a fluid transfer assembly comprising a first actuator port, a second actuator port and one or more return ports. In an optional embodiment of any of the aspects or embodiments described herein, the first actuator port and second actuator port may be in fluid communication with the one or more return ports when the outer spool is in the bypass position.

In another aspect of the invention a hydraulic system for a flight control surface is provided. The hydraulic system may comprise a valve according to any of the aspects or embodiments described herein and a hydraulic actuator comprising a first actuator chamber and a second actuator chamber. The valve may be in fluid communication with a fluid return. The inner spool of the valve may be actuatable based upon an actuator pressure differential between the first actuator chamber and the second actuator chamber.

In an optional embodiment of any of the aspects or embodiments described herein, the first actuator chamber or the second actuator chamber may be in fluid communication with the fluid return when the actuator pressure differential exceeds a predetermined threshold.

In an optional embodiment of any of the aspects or embodiments described herein, the first actuator chamber and the second actuator chamber may be in fluid communication with the fluid return when the outer spool is in the bypass position.

In an optional embodiment of any of the aspects or embodiments described herein, the hydraulic system may comprise a solenoid valve in fluid communication with the bypass chamber.

In an optional embodiment of any of the aspects or embodiments described herein, the activation chamber may be in fluid communication with a fluid supply and the bypass chamber may be selectively in fluid communication with the fluid supply or the fluid return under the action of the solenoid valve.

In another aspect of the invention a method of operating a valve (e.g., a valve according any of the aspects or embodiments described herein), is provided. The method comprises actuating an outer spool to an active position by supplying hydraulic fluid at a supply pressure greater than a predetermined activation pressure to an activation chamber of the valve, actuating an inner spool in a first direction or a second direction responsive to a pressure differential between a first pressure chamber and a second pressure chamber, and actuating the outer spool to a bypass position by supplying hydraulic fluid at the supply pressure to the activation chamber and a bypass chamber of the valve. The inner spool is located within the outer spool.

In an optional embodiment of any of the aspects or embodiments described herein, the method may comprise measuring a position of the inner spool and determining the pressure differential based on the measured position.

In an optional embodiment of any of the aspects or embodiments described herein, the method may comprise actuating the inner spool in the first direction to a first pressure relief position or in the second direction to a second pressure relief position responsive to the pressure differential exceeding a predetermined threshold.

In an optional embodiment of any of the aspects or embodiments described herein, the method may comprise actuating the outer spool to the bypass position places the first pressure chamber and the second pressure chamber in fluid communication with a fluid return.

Preferred embodiments will now be described with reference to the drawings.

### BRIEF DESCRIPTION OF THE DRAWINGS

Figure 1 shows a valve in an inactive or bypass mode.
Figure 2 shows the valve of Figure 1 in an active mode with a null differential pressure between a first actuator chamber and a second actuator chamber.
Figure 3 shows a schematic of a hydraulic system in an inactive mode.
Figure 4 shows the hydraulic system of Figure 3 in an active mode with a null differential pressure between a first actuator chamber and a second actuator chamber.
Figure 5 shows a schematic of another hydraulic system in an active mode with a null differential pressure between a first actuator chamber and a second actuator chamber.
Figure 6 shows the hydraulic system of Figure 3 in an active mode with a pressure in a first actuator chamber greater than a pressure in a second actuator chamber.
Figure 7 shows the hydraulic system of Figure 3 in an active mode with a pressure in the first actuator chamber greater than a pressure in the second actuator chamber and with pressure relief in operation.
Figure 8 shows the hydraulic system of Figure 3 in an active mode with a pressure in the second actuator chamber greater than a pressure in the first actuator chamber.
Figure 9 shows the hydraulic system of Figure 3 in an active mode with a pressure in the second actuator chamber greater than a pressure in the first actuator chamber and with pressure relief in operation.
Figure 10 shows the hydraulic system of Figure 3 in a bypass mode.
Figure 11 shows a normalised graph of the position of an inner spool and the corresponding valve conditions.

### DETAILED DESCRIPTION

As described herein, a valve is provided for an actuator of a flight control surface that provides the functions of pressure differential sensing, pressure relief and bypass. The valve comprises an inner spool actuatable in a first direction and a second direction responsive to a first pressure differential acting across the inner spool, and an outer spool actuatable in the first direction and second direction between an active position and a bypass position, wherein the inner spool is located within the outer spool.

The pressure differential sensing function may comprise sensing the difference in pressure between two ports of the valve. The two ports may be for fluid communication with two respective chambers of an actuator. Hence the pressure differential sensing function may advantageously be used to sense the pressure differential acting between chambers of an actuator.

The pressure relief function may comprise fluidly coupling one or both (e.g., each alternatively) of said ports to one or more return ports for relieving the pressure in the event that the differential pressure is greater than a predetermined threshold. The pressure relief function may comprise fluidly coupling the port that has the higher pressure to a hydraulic return port(s) for relieving the pressure.

The bypass function may comprise fluidly coupling said ports to one or more return ports and/or may comprise closing one or more input ports of the valve. The valve may therefore be operable to hydraulically bypass a downstream component of the valve (e.g. the actuator) when in use in a hydraulic system.

The inner spool may be concentric with the outer spool. The inner spool may be actuatable relative to the outer spool. The inner spool may be slidingly disposed within the outer spool, and may be in direct contact with the outer spool e.g. at portions along its length. The inner spool may slide back-and-forth relative to the outer spool, depending upon hydraulic conditions in e.g. the actuator and/or a wider hydraulic system. The second direction may be opposite the first direction, such that the inner spool and/or outer spool is actuatable back-and-forth along its axis.

The inner spool may be configured to move in the first direction and/or the second direction by an amount proportional to a pressure differential acting on the inner spool e.g. between chambers defined thereby. Because the position of the inner spool in the first and second direction is proportional to the pressure differential acting on the inner spool, the valve may be configured to provide pressure sensing and pressure relief based on the position of the inner spool.

For example, when the valve is used in conjunction with an actuator of a flight control surface, e.g. the valve being fluidly coupled to the actuator, a pressure differential across the actuator chambers would cause the inner spool to move in either the first or second direction, which therefore allows measurement of the pressure differential across the actuator chambers e.g. using any suitable sensor, such as an LVDT as described herein. The movement of the inner spool relative to the outer spool may also provide pressure relief if the pressure differential were to surpass a predetermined threshold, and e.g. therefore move the inner spool far enough relative to the outer spool.

The inner spool may be actuatable in the first direction and/or the second direction to place the valve in a throughput configuration and a pressure relief configuration. The throughput configuration and pressure relief configuration may be entered with the outer spool in the active position. The throughput configuration may comprise the inner spool in an equilibrium position. The throughput configuration may comprise the inner spool in a range of positions from the equilibrium position in the first direction and/or the second direction. The pressure relief configuration may comprise the inner spool in a position in the first and/or second direction from the equilibrium position by an amount greater than a predetermined threshold. In other words, the inner spool may be moveable from an equilibrium position in either of the first or second direction and the valve may remain in the throughput configuration until the inner spool reaches and passes a threshold position in either of the first or second direction at which point the valve is placed in the pressure relief configuration. Thus, the inner spool may move back and fore within a given range of positions based on a pressure differential across it, but if it moves too far in either direction it may vent hydraulic fluid and thereby provide pressure relief. Thus, the inner spool may provide pressure relief in the event that the pressure differential across it surpasses the predetermined threshold. If the pressure differential does not exceed the predetermined threshold, the inner spool may provide the pressure differential sensing function.

In the throughput configuration the valve may be configured to output hydraulic fluid that is inputted to it. In other words, in the throughput configuration the valve may act as a conduit. For example, in a hydraulic system, an electro-hydraulic servo valve (EHSV) may have two outputs that are in hydraulic fluid communication with two ports of the valve and the valve may fluidly communicate those two outputs to two ports of the valve that are in hydraulic fluid communication with two hydraulic chambers of an actuator.

Alternatively, the valve may be placed in fluid communication with the first actuator chamber and the second actuator chamber remotely to the servo valve.

In its active position, the outer spool may permit operation of the inner spool between the throughput configuration and the pressure relief configuration e.g. such that the valve is 'active'. In its bypass position, the outer spool may connect ports of the valve to a return port (and therefore a return line of a wider hydraulic system) to thereby bypass the actuator. The bypass mode allows redundancies (e.g., one of a plurality of actuators acting on the same control surface to function unimpeded by a faulty actuator).

The valve may comprise an activation chamber for receiving hydraulic fluid, a bypass chamber for receiving hydraulic fluid and a bypass spring, wherein the outer spool is actuatable based upon the forces from the bypass spring and a pressure differential between hydraulic fluid in the activation chamber and the bypass chamber. Although termed a "spring", the bypass spring may comprise any suitable resilient member arranged to bias the outer spool to the bypass position.

The activation chamber may be a chamber defined by an outer surface of the outer spool and an inner surface of a fluid transfer assembly (e.g., a sleeve or housing of the valve). In other words, the activation chamber may be a chamber bounded by, and radially between, an outer surface of the outer spool and an inner surface of fluid transfer assembly. The outer spool may be located concentrically within the fluid transfer assembly. The activation chamber may be an annular chamber.

The valve may be arranged so that in the event pressure within the activation chamber exceeds a predetermined activation pressure, the resulting force on the outer spool drives the outer spool against the bypass spring to the active position. If the pressure within the activation chamber exceeds the predetermined activation pressure, the force produced by the pressure in the activation chamber, which may be referred to as the activating pressure force, overcomes the force produced by the bypass spring, which may be referred to as the bypass spring force, and hence the outer spool is driven into the active position. Thus, the outer spool may be actuated to its active position only if pressure in the activation chamber is high enough.

In the event that pressure within the activation chamber is below the predetermined activation pressure, the resulting force on the outer spool (e.g. from the bypass spring) drives the outer spool to the bypass position. In the event that the pressure within the activation chamber is less than the predetermined activation pressure the bypass spring force produced by the bypass spring overcomes the activating pressure force produced by the pressure in the activation chamber (or lack thereof) and hence the outer spool is driven into the bypass position.

The valve may be arranged such that it enters the active configuration if the pressure activating force exceeds the bypass spring force and enters the bypass configuration if the bypass spring force exceeds the pressure activating force. In use, the activation chamber may be connected to a supply line of a hydraulic system and the activation chamber and bypass spring may be configured such that the outer spool is moved to the active position in the event that pressure in the hydraulic system is high enough. Otherwise the outer spool may remain (or move to) its bypass position. Hence, in the event of a failure in the hydraulic system, pressure in the supply line, and therefore pressure in the activation chamber will fall and the outer spool will enter/remain in the bypass position. The valve may therefore be failsafe in this respect.

The bypass spring may be located between a mechanical stop of the valve at one end and the outer spool at the other end. The bypass spring may be located between a mechanical stop of the valve at one end and an intermediate sleeve of the valve that is coupled to the outer spool at the other end. The bypass spring may be concentric with the intermediate sleeve and/or the inner spool. It may be arranged to bias the outer spool in the second direction, and/or to oppose force acting on the outer spool from hydraulic fluid in the activation chamber. The bypass spring may be arranged to actuate the outer spool to the bypass position unless prevented from doing so by pressure in the activation chamber above the predetermined threshold. Thus, the valve may be arranged such that the outer spool is in its bypass position unless the hydraulic system is operating at sufficient pressure.

The activation chamber may be arranged in use to receive hydraulic fluid from a hydraulic system e.g. hydraulic fluid at a supply pressure from a hydraulic system as described herein. The outer spool may be configured such that pressure in the activation chamber urges it in the first direction e.g. by a flange, piston head or the like.

The bypass chamber may be a chamber defined by an outer surface of the outer spool and an inner surface of the fluid transfer assembly. In other words, the bypass chamber may be a chamber bounded by, and radially between, an outer surface of the outer spool and an inner surface of fluid transfer assembly. The bypass chamber may be an annular chamber.

The valve may be arranged so that in the event pressure within the bypass chamber exceeds a predetermined bypass pressure, the resulting force on the outer spool drives the outer spool against the pressure in the activation chamber to the bypass position. If the pressure within the bypass chamber exceeds the predetermined bypass pressure, the force produced by the pressure in the bypass chamber along with the force produced by the bypass spring, which may be referred to as the bypass pressure force, overcomes the force produced by the pressure in the activation chamber.

In the event that the pressure in the bypass chamber and the activation chamber is equal, the resulting force on the outer spool (e.g. from the bypass spring) drives the outer spool to the bypass position. The outer spool may be configured such that pressure in the bypass chamber urges it in the second direction e.g. by a flange, piston head or the like.

In use, the bypass chamber may be connected to a solenoid valve (e.g., a 2-way solenoid valve). The solenoid valve may selectively communicate the bypass chamber with a supply line of a hydraulic system or a return line of the hydraulic system. In the event that the solenoid valve communicates the bypass chamber with the supply line, a pressure differential between the activation chamber and bypass chamber may be null (zero).

The solenoid valve may be biased to the supply line. That is, the solenoid may be configured to be normally open to the supply line and normally closed to the return line such that it needs to be activated communicate the bypass chamber to the return line (e.g., by the application of an electrical current). Hence, in the event of a failure in the solenoid valve, pressure in the supply line will be communicated to the bypass chamber, thereby counteracting the pressure in the activation chamber (i.e., resulting in a null pressure differential), and the outer spool will move to the bypass position (e.g., under the action of the bypass spring). The valve and hydraulic system may therefore be failsafe to solenoid failure.

The position of the outer spool may therefore depend upon the balance of forces from the bypass spring on the one hand, and a pressure differential between the activation chamber and the bypass chamber on the other hand. Unless force from the pressure differential between the activation chamber and the bypass chamber overcomes force from the bypass spring, the outer spool will remain in the bypass position. Otherwise it will move to the active position.

The valve may comprise a first pressure chamber and a second pressure chamber, and the inner spool may be actuatable in response to a pressure difference between the first pressure chamber and the second pressure chamber.

The position of the inner spool may therefore depend upon the balance of forces from pressure within the first pressure chamber and the second pressure chamber. The first pressure chamber may be configured so that pressure therein urges the inner spool in the first direction. The second pressure chamber may be configured so that pressure therein urges the inner spool in the second direction.

The first pressure chamber may be defined by an outer surface of the inner spool and an inner surface of the outer spool. The inner spool and outer spool may be configured such that the first pressure chamber is bounded by an outer surface of the inner spool, a first land of the inner spool, a second land of the inner spool and an inner surface of the outer spool.

The second pressure chamber may be defined by an outer surface of the inner spool and an inner surface of the outer spool. The inner spool and the outer spool may be configured such that the second pressure chamber is bounded by an outer surface of the inner spool, a fourth land, a fifth land, and an inner surface of the outer spool.

The inner spool may be configured to move in the first direction and/or the second direction by an amount proportional to a pressure differential between the first pressure chamber and the second pressure chamber. Because the position of the inner spool in the first and second direction is proportional to the pressure differential between the first pressure chamber and second pressure chamber the valve may be configured to provide pressure sensing and pressure relief based on the position of the inner spool.

For example, when the valve is used in conjunction with an actuator of a flight control surface, e.g. the valve being fluidly coupled to the actuator, such that a pressure differential across actuator chambers is applied to the first pressure chamber and the second pressure chamber, the inner spool would be caused to move in either the first or second direction, which therefore allows measurement of the pressure differential across the actuator chambers and pressure relief if it were to surpass a predetermined threshold.

When pressures in the first pressure chamber and second pressure chamber are equal, the inner spool will occupy an equilibrium position. When pressure in one pressure chamber exceeds pressure in the other, the inner spool will move from the equilibrium position by a corresponding amount. The larger the difference in pressures, the larger the movement of the inner spool from the equilibrium position.

The valve may comprise a pressure differential spring configured to bias the inner spool towards an equilibrium or null position. Although termed a "spring", the pressure differential spring may comprise any suitable resilient member arranged to bias the inner spool to the equilibrium position.

In the event that a pressure difference occurs between the first pressure chamber and the second pressure chamber, a pressure differential force may act on the inner spool to urge the inner spool in the first or second direction dependent on which of the first pressure chamber and the second pressure chamber has a relatively high pressure and which has a relatively low pressure.

In the event that the inner spool is urged in the first or second direction the pressure differential spring may provide a pressure differential spring force acting in the opposing direction. That is, in the event that the inner spool is urged in the first direction, the pressure differential spring force may act in the second direction. In the event that the inner spool is urged in the second direction, the pressure differential spring force may act in the first direction.

The pressure differential spring force may increase as compression of the pressure differential spring increases as a function of the stiffness of the spring. Therefore, in the event that the inner spool moves in the first or second direction due to the pressure differential force, the pressure differential spring force may increase until it matches the pressure differential force at which point the forces will be balanced and the inner spool may stop moving in the first or second direction. Advantageously, because the movement of the inner spool in the first and second direction may be a function of the stiffness of the pressure differential spring and the pressure difference acting between the first pressure chamber and the second pressure chamber, the pressure difference can be measured based on the position of the inner spool.

Furthermore, because movement of the inner spool in the first and second direction may be a function of the stiffness of the pressure differential spring, the pressure differential at which the valve is configured to enter the pressure relief configuration can be set by selecting the appropriate stiffness of the pressure differential spring.

The pressure differential spring may be located concentrically about the inner spool. The pressure differential spring may be located within the outer spool. The pressure differential spring may be located with an intermediate sleeve. The intermediate sleeve may be affixed to the outer spool and e.g. may move rigidly therewith. The pressure differential spring may be located about the inner spool and within the intermediate sleeve.

The valve may comprise a first inner spool bushing and a second inner spool bushing. The first inner spool bushing and the second inner spool bushing may be located about the inner spool and the pressure differential spring may be located between the first inner spool bushing and the second inner spool bushing. The first inner spool bushing and the second inner spool bushing may be located within the outer spool. The first inner spool bushing and the second inner spool bushing may be located within the intermediate sleeve. The first and second inner spool bushing may be in sliding engagement with the inner spool, and may have a limited sliding movement relative thereto.

The first inner spool bushing and the second inner spool bushing may be arranged to place the delta pressure spring into compression in the event that the inner spool is moved in either the first or second direction from an equilibrium position.

The valve may be configured such that movement of the inner spool in the first direction causes the first inner spool bushing to abut part of the valve and thus continued movement of the inner spool in the first direction causes the pressure differential spring to compress. The valve may be configured such that movement of the inner spool in the second direction causes the second inner spool bushing to abut another part of the valve and thus continued movement of the inner spool in the second direction causes the pressure differential spring to compress.

The arrangement of the first inner spool bushing and the second inner spool bushing may enable movement of the inner spool in either of the first or second direction to cause compression of the delta pressure spring thus only a single spring may be required for biasing the inner spool towards an equilibrium position.

The valve may comprise a position sensor configured to measure the position of the inner spool.

Since the position of the inner spool may depend upon the pressure differential across it, the position sensor may therefore be arranged to measure the pressure differential acting on the inner spool.

The position sensor may be a Linear Variable Differential Transformer (LVDT), or any suitable sensor for determining the position of the inner spool.

The position sensor can be used to measure the distance the inner spool has moved in either the first direction or second direction from an equilibrium position, which can subsequently be converted in to a measure of differential pressure acting on the inner spool.

The bypass function or mode may isolate the actuator in case of failure and avoid hydraulic lock.

The hydraulic system may comprise the two valves as described (e.g., in parallel), both operable independently with corresponding hydraulic actuators. The hydraulic system may comprise an electrohydraulic servo valve (EHSV) operable to actuate the hydraulic actuator. The hydraulic system may comprise two EHSVs, each associated with one of the valves.

According to another aspect of the invention an aircraft is provided comprising the valve as described and/or the hydraulic system as described.

According to another aspect of the invention a method of operating a valve (e.g., as described above) is provided. Actuating the inner spool may comprise actuating the inner spool responsive to a pressure difference between a first pressure chamber and a second pressure chamber of the valve.

The method may comprise measuring the position of the inner spool and determining a pressure difference of the chambers based on the measured position.

The following is a detailed description of an example valve with reference to the figures.

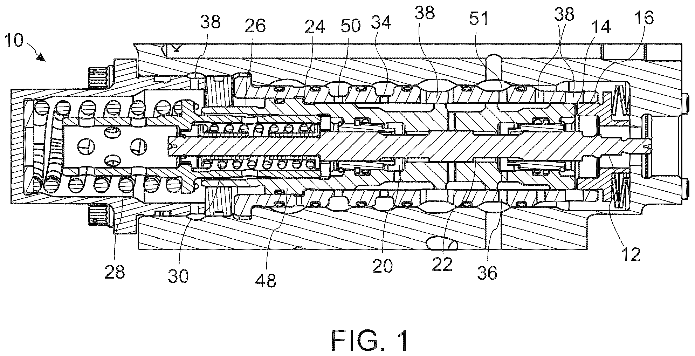

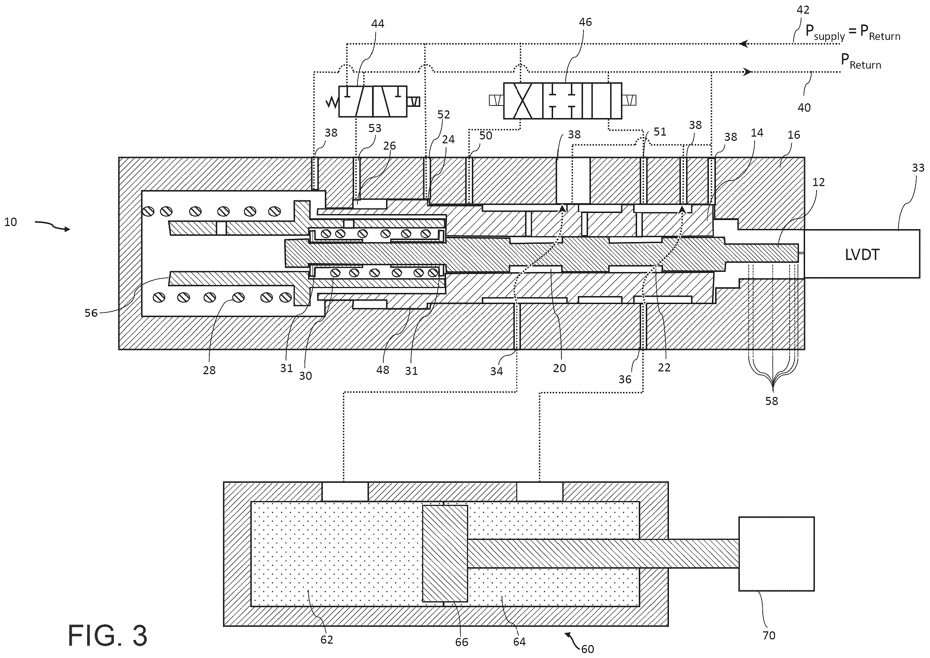

Figure 1 shows an example valve 10 in an inactive or bypass position. The valve 10 includes an inner spool 12, an outer spool 14 and a fluid transfer assembly 16 (e.g., a sleeve or housing). The fluid transfer assembly 16 includes a first actuator port 34 and a second actuator port 36, each configured for communication with a respective fluid chamber of an actuator (e.g., a hydraulic actuator). The fluid transfer assembly 16 further comprises one or more return ports 38. The fluid transfer assembly 16 includes an activation port 52 (Fig. 3) in fluid communication with an activation chamber 24 and a bypass port 53 (Fig. 3) in fluid communication with a bypass chamber 26. The fluid transfer assembly 16 also includes a first servo port 50 for communication with a first control pressure from a servo valve (e.g., an EHSV) and a second servo port 51 for communication with a second control pressure from the servo valve. Alternatively, the servo ports 50, 51 may be omitted.

The inner spool 12 is located concentrically within the outer spool 14 which is in turn located concentrically within the fluid transfer assembly 16. The inner spool 12 and the outer spool 14 are translatable or actuatable to open and close fluid passageways within the fluid transfer assembly 16 (e.g., one or more of the ports described above). The inner spool 12 and outer spool 12 are translatable in a first direction and a second direction opposite to the first direction. The valve 10 includes the activation chamber 24, which is for receiving hydraulic fluid, and is defined by an outer surface of the outer spool 14 and an inner surface of the fluid transfer assembly 16.

A bypass chamber 26 for receiving hydraulic fluid is defined by an outer surface of the outer spool 14 and an inner surface of the fluid transfer assembly 16. A bypass spool land or piston head 48 is provided on the outer spool 14. The piston head 48 fluidly separates the activation chamber 24 and the bypass chamber 26. The valve 10 has at least a bypass mode and an active mode and is configured to perform the functions of bypass, differential pressure sensing and differential pressure relief.

In the arrangement shown in Figure 1, the inner spool 12 is biased to the null position (middle position) relative to the outer spool 14 under the action of a pressure differential spring 30, and the outer spool is biased to the bypass position under the action of a bypass spring 28. In this configuration, the first actuator port 34 and the second actuator port 36 are each in fluid communication with the one or more return ports 38.

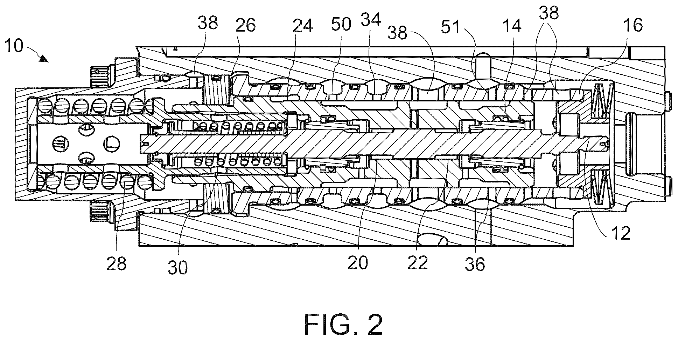

Figure 2 shows the valve 10 in an active position. The inner spool 12 is biased to the null position (middle position) relative to the outer spool 14 under the action of a pressure differential spring 30. The outer spool 14 is in an active position. The bypass spring 28 is compressed or charged. In this configuration, the first actuator port 34 is in fluid communication with a first pressure chamber 20 defined by an outer surface of the inner spool 12 and an inner surface of the outer spool 14. The second actuator port 36 is in fluid communication with a second pressure chamber 22 defined by an outer surface of the inner spool 12 and an inner surface of the outer spool 14.

Figure 3 shows a schematic of a hydraulic system including the valve 10 and an actuator 60 in an inactive position. The inner spool 12 is operatively connected to a position sensor 33 (e.g., a linear variable differential transformer (LVDT)). The position sensor 33 is configured to measure the linear position of the inner spool 12. The hydraulic system has a fluid supply line 42 and a fluid return line 40, for providing relatively high pressure hydraulic fluid and returning relatively low pressure hydraulic fluid respectively. For example, the fluid supply line 42 may be connected to a hydraulic pump outlet and the fluid return line 40 may be connected to an input end of a hydraulic pump and/or tank or reservoir. Any suitable arrangement of hydraulic system may be used.

The valve 10 is in fluid communication with the actuator 60. The actuator 60 is of the type comprising two chambers, i.e. a first actuator chamber 62 and a second actuator chamber 64, separated by a piston 66 such that fluid output by the valve 10 to each of the two chambers 62, 64 can cause the piston 66 to be driven by the pressure difference between the two chambers 62, 64. This can, in turn, drive a control surface of an aircraft 70.

The valve is also in fluid communication with a servo valve 46 (e.g., an electro-hydraulic servo valve (EHSV)). The servo valve 46 has a first servo outlet in fluid communication with the first servo port 50 and a second servo outlet in fluid communication with the second servo port 51. The servo valve 46 may be operable to control the actuator 60, subject to intervention by the valve 10 as described herein.

In the configuration shown in Figure 3, the system is inactive such that the pressure of the fluid supply line 42 is equal to the return pressure (P_{Return}, indicated by a dotted line) of the fluid return line 40. This may be the case, for example, when the system is at its start-up configuration before a pressurising pump is energised. The inner spool 12 is at a first of a plurality of indexed positions 58 corresponding to a bypass or inactive mode. Advantageously, an operator can verify the position of the inner spool 12 (e.g., from a flight control computer (FCC)) at start-up to ensure that the valve 10 is operating correctly (e.g., to ensure that the valve is at the expected indexed position 58). In the event that the valve is not at the correct or expected indexed position 58, an operator can switch the valve 10 and accompanying actuator 60 to bypass mode.

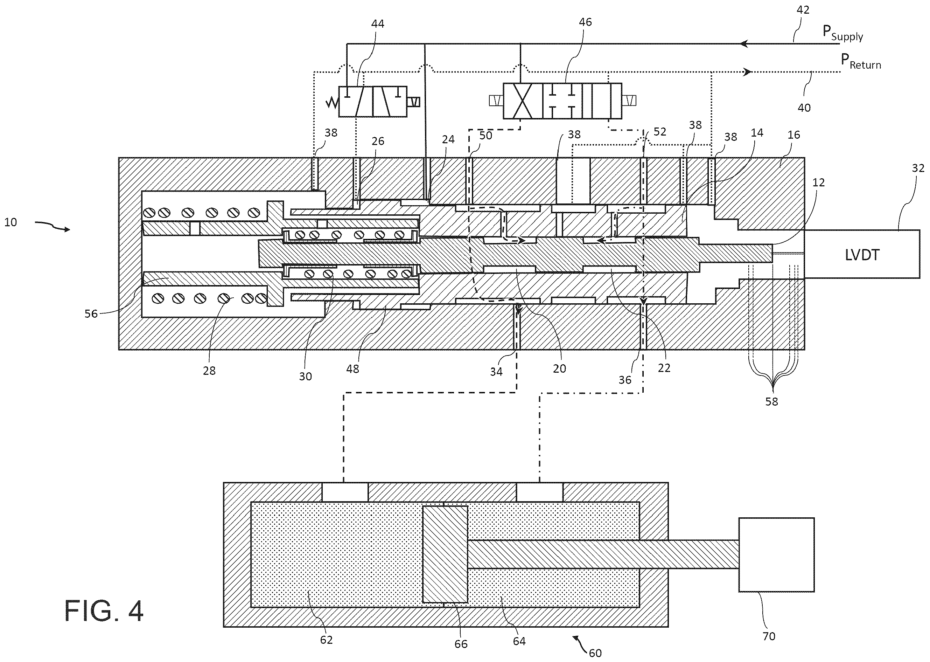

Figure 4 shows the hydraulic system in active mode. Active mode may be initiated by a pressure in the activation chamber 24 exceeding a predetermined activation pressure, the resulting force on the outer spool 14 driving the outer spool 14 against the bypass spring 28 to the active position. In the arrangement shown, the activation chamber 24 is fluidly coupled to the fluid supply line 42 which, in this case, is at an active supply pressure (P_{Supply}, indicated by a solid line) such that the valve automatically switches to the active mode once the pressure in the fluid supply line 42 exceeds the predetermined activation pressure (e.g., once a pump providing the supply pressure is active).

Conversely, the bypass chamber 26 is fluidly coupled to the fluid return line 40 via a solenoid valve 44. The solenoid valve 44 in this example is a two-way solenoid valve in fluid communication with the fluid supply line 42 and the fluid return line 40. The solenoid valve 44 is operable to control the valve 10 via control of the supply pressure to the bypass chamber 26. When the solenoid valve 44 is de-energized it permits hydraulic pressure from the fluid supply line 42 to be supplied to the bypass chamber 26. When the solenoid valve 44 is energized it fluidly connects the bypass chamber 26 with the fluid return line 40.

Under active operating conditions of the valve 10, the servo valve 46 is operable to selectively provide a first control pressure fluid (e.g., indicated by a dashed line) to the first actuator chamber 62 and provide a second control pressure fluid (e.g., indicated by a dash-dot-dash line) to the second actuator chamber 64 via the valve 10, to thereby operate the actuator 60. Control of the actuator 60 may be performed via the servo valve 46 selectively placing one of the first actuator chamber 62 and the second actuator chamber 64 in fluid communication with fluid supply line 42. At the same time, the other of the first actuator chamber 62 and the second actuator chamber 64 may be placed in fluid communication with hydraulic fluid return line 40 via the servo valve 46.

In this configuration, the valve 10 acts as a conduit to place the first outlet of the servo valve 46 in fluid communication with the first actuator chamber 62 and the second outlet of the servo valve 46 in fluid communication with the second actuator chamber 64 via the valve 10. The valve 10 may be referred to as being in a throughput configuration during such operation.

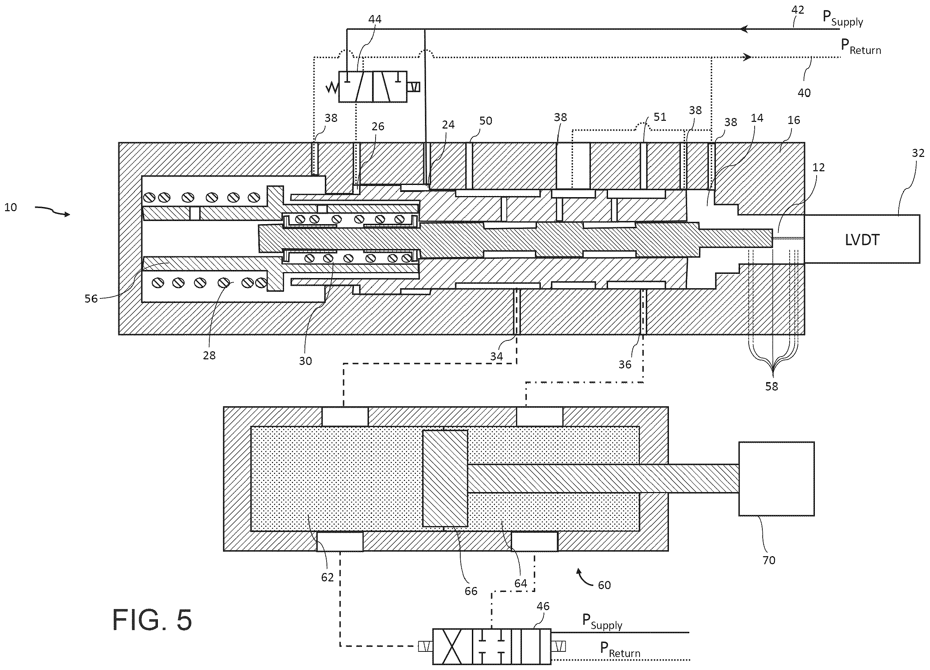

Alternatively, however, the valve 10 may be otherwise configured within a hydraulic system, e.g., so that it does not act as a conduit between the servo valve 46 and actuator 60. For example, as shown in Figure 5, the valve 10 may be placed in fluid communication with the first actuator chamber 62 and the second actuator chamber 64 remotely to the servo valve 46. For example, the valve 10 may be installed in place of a pressure relief valve that would otherwise be arranged to relieve excess pressure from the first actuator chamber 62 and the second actuator chamber 64. In this configuration, the actuator 60 may effectively be considered to be a conduit between the servo valve 46 and the valve 10. In this configuration, the servo ports 50, 51 may be omitted or blocked off. In another alternative, the valve 10 may be branched from fluid lines between the servo valve 46 and actuator 60 such that the valve 10 is fluidly connected (e.g., by sense lines) to fluid flows between the servo valve 46 and actuator 60 (not shown). The function of the valve 10 in these configurations is substantially the same as described above and below, providing positional feedback from the inner spool 12 indicative of the pressure differential between the first actuator chamber 62 and the second actuator chamber 64, as well as the pressure relief and bypass functions described in more detail below.

Referring again to the example shown in Figure 4, the inner spool 12 is in its null position, indicating the pressure differential between the first actuator chamber 62 and the second actuator chamber 64 is null (zero or close to zero) and/or that the first control pressure fluid and second control pressure fluid is at equilibrium. The inner spool 12 is at a corresponding indexed position 58 indicating that the inner spool 12 is at its null position and the outer spool 14 is at its active position.

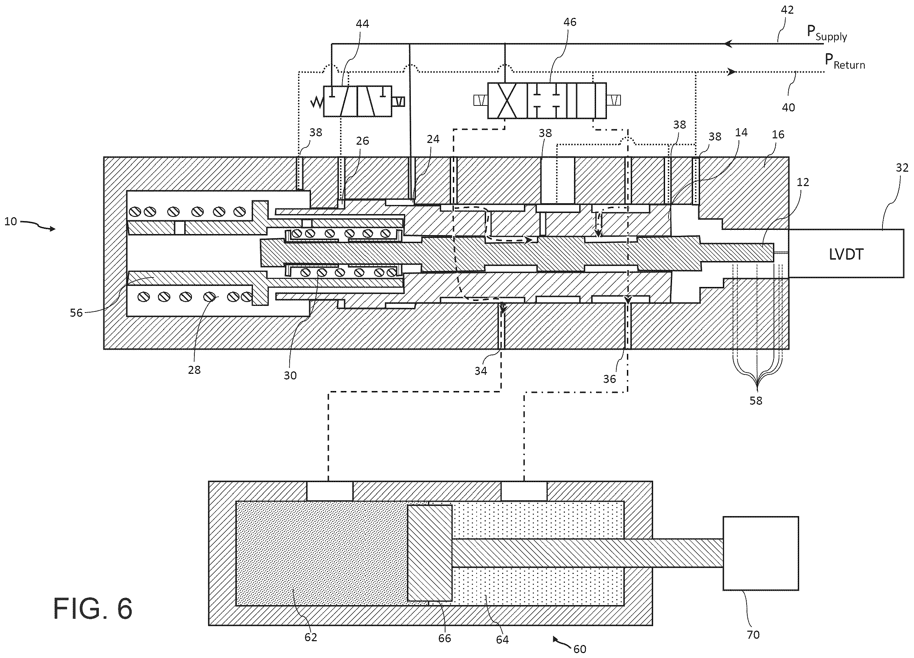

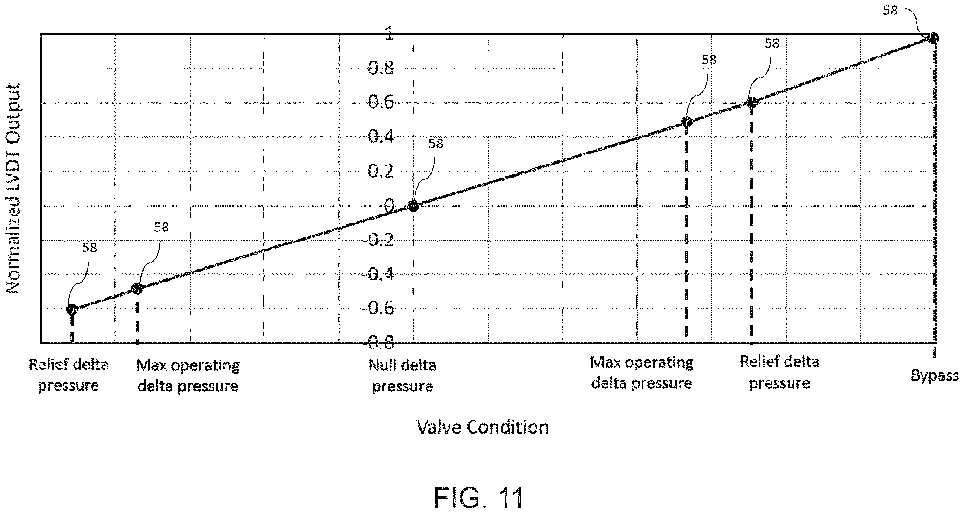

Figure 6 shows the valve 10 in an active mode wherein the first actuator chamber 62 has a higher pressure relative to the second actuator chamber 64. In this configuration the relatively higher chamber pressure and relatively lower chamber pressures are communicated to the first pressure chamber 20 and second pressure chamber 22 respectively and a pressure differential between these chambers 20, 22 acts on the inner spool 12 so as to move it in the first direction. In this case the inner spool is not at a specific indexed position 58. Instead, the inner spool 12 is at an intermediate position (e.g., between the null position and a maximum operating pressure position). In accordance with examples, the differential pressure spring 30 may provide for a linear relationship between the position of the inner spool 12 between the null position and a maximum operating pressure position (e.g., as shown in Figure 11). The position sensor 32 can therefore be used to exactly correlate the differential pressure between pressure chambers 20, 22 (and corresponding actuator chambers 62, 64).

In the active mode the valve 10 is further configured to provide differential pressure relief when required, e.g., when the differential pressure between the first actuator chamber 62 and the second actuator chamber 64 exceeds a relief pressure threshold. When performing the differential pressure relief function the valve 10 is configured to connect the actuator chamber 62, 64 having the relatively higher (excess) pressure to the fluid return line 40 in response to the differential pressure across the first and second actuator chambers 62, 64 exceeding a preselected threshold.

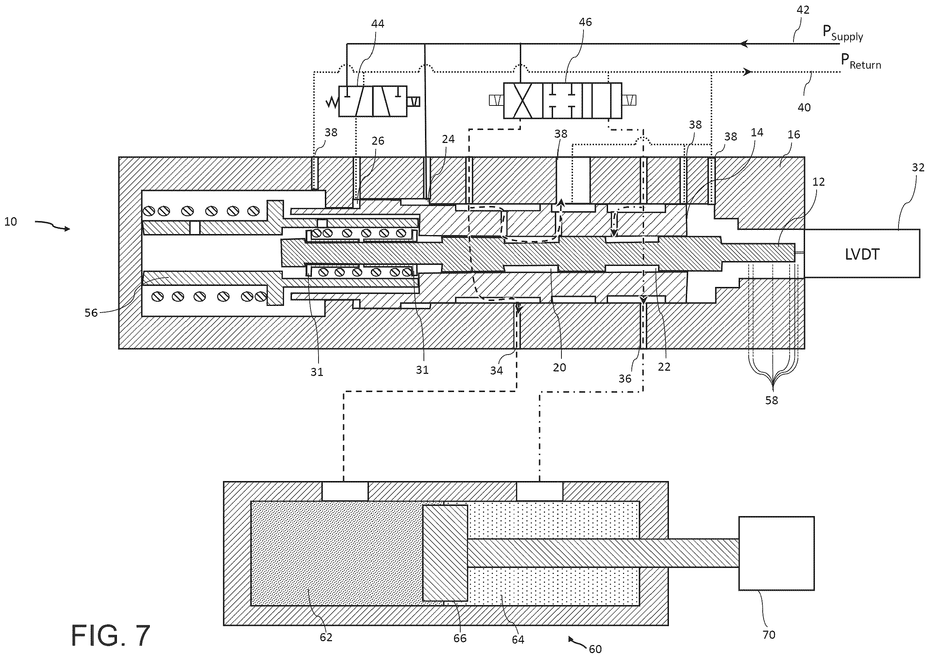

Figure 7 shows the valve 10 in the active mode with pressure in the first actuator chamber 62 greater than the pressure in the second actuator chamber 64 and with pressure relief in operation. In the event that the pressure difference between the first actuator chamber 62 and the second actuator chamber 64 is greater than a predetermined threshold, the inner spool 12 moves far enough relative to the outer spool 12 to enact the pressure relief configuration shown.

As described previously, in the event that the hydraulic pressure in the first actuator chamber 62 is greater than the hydraulic pressure in the second actuator chamber 64, the pressure in the first pressure chamber 20 is greater than the pressure in the second pressure chamber 22. This pressure differential causes a force to act on the inner spool 12 in the first direction. The pressure differential causes the inner spool 12 to translate in the first direction by an amount that is a function of the stiffness of the pressure differential spring 30 and hence of the resulting pressure differential spring force acting to oppose the pressure differential.

The inner spool 12, outer spool 14 and fluid transfer assembly 16 are configured such that in the event that the inner spool 12 translates over a threshold distance in the first direction (corresponding to another indexed position 58) fluid passageways are opened that place the first pressure chamber 20 and first actuator chamber 62 in fluid communication with the fluid return line 40.

Therefore, if the pressure differential between the first actuator chamber 62 and the second actuator chamber 64 exceeds a threshold pressure differential, the valve 10 provides pressure relief to reduce the pressure differential back to the threshold pressure differential. This may prevent damage to the hydraulic system and/or actuator 60.

In the example shown, the differential pressure spring 30 is provided between a first inner spool bushing 31 and a second inner spool bushing 31 (e.g., floating bushings). The first and second inner spool bushings 31 are located concentrically about the inner spool 12 and are translatable along part of the inner spool 12. Translation of the first and second inner spool bushings 31 along inner spool 12 is limited by mechanical interaction with other components of valve 10 (e.g., the outer spool 14 and an intermediate sleeve 56). Translation of the second inner spool bushing 31 in the first direction is limited by a land of the inner spool 12 or the outer spool 14. Translation of the first inner spool bushing 31 in the second direction is limited by the intermediate sleeve 56 or by an inner spool protrusion, such as an O-ring, flange or the like. The intermediate sleeve 56 and outer spool 14 may collectively contain the differential pressure spring 30. The intermediate sleeve 56 and outer spool 14 may be fixed to, or be integral with, one another.

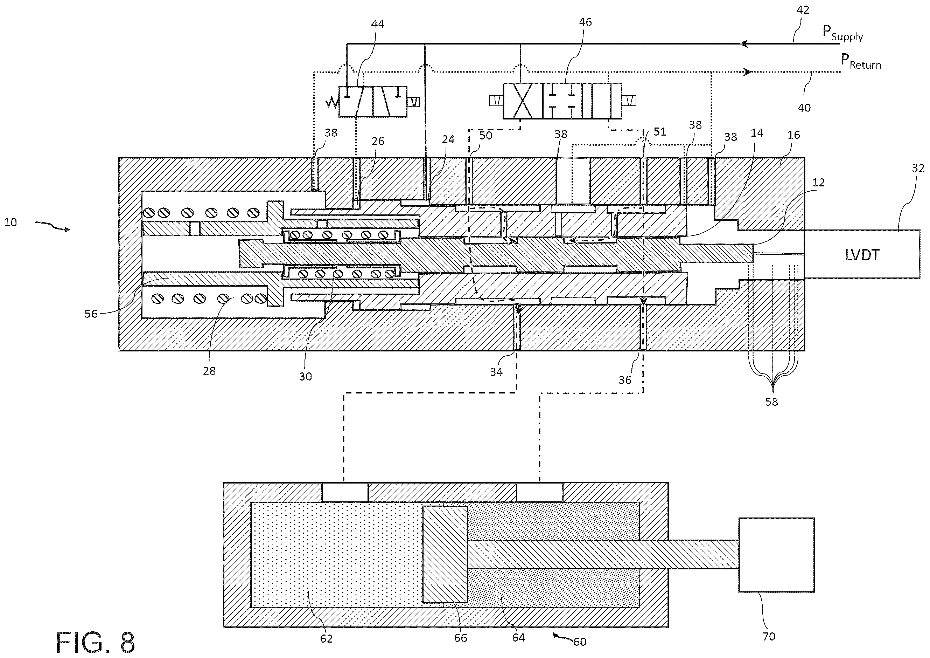

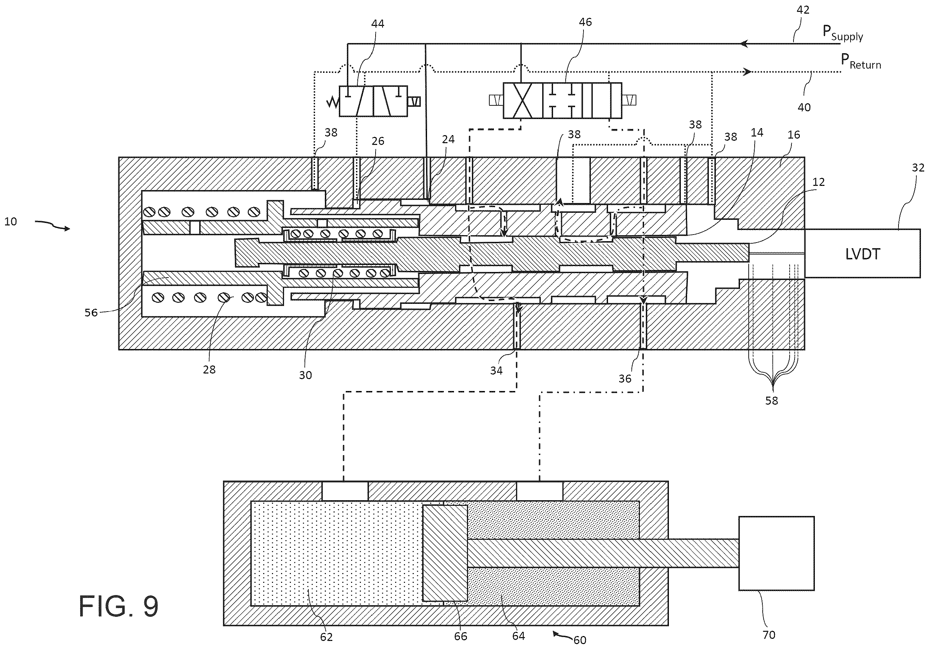

Positioning the differential pressure spring 30 in this way allows for dual directional action of the inner spool 12 under the action a single spring thereby ensuring an equal equalising force on the inner spool 12 in both the first and second direction. For example, as illustrated in Figures 8 and 9, the pressure sensing and relief functions are provided in substantially the same manner in the second direction.

Figure 8 shows the valve 10 in an active mode wherein the first actuator chamber 62 has a lower pressure relative to the second actuator chamber 64. In this configuration the relatively lower chamber pressure and relatively higher chamber pressures are communicated to the first pressure chamber 20 and second pressure chamber 22 respectively and a pressure differential between these chambers 20, 22 acts on the inner spool 12 so as to move it in the second direction. In this case the inner spool is not at a specific indexed position 58. Instead, the inner spool 12 is at an intermediate position (e.g., between the null position and a maximum operating pressure position in the second direction). In accordance with examples, the differential pressure spring 30 may provide for a linear relationship between the position of the inner spool 12 between the null position and a maximum operating pressure position in the second direction, as shown in Figure 11 (normalised such that the second direction is represented as a negative displacement). The position sensor 32 can therefore be used to exactly correlate the differential pressure between pressure chambers 20, 22 (and corresponding actuator chambers 62, 64) in both the first direction and the second direction.

Figure 9 shows the valve 10 in the active mode with pressure in the first actuator chamber 62 less than the pressure in the second actuator chamber 64 and with pressure relief in operation. In the event that the pressure difference between the first actuator chamber 62 and the second actuator chamber 64 is greater than a predetermined threshold, the inner spool 12 moves far enough relative to the outer spool 12 to enact the pressure relief configuration shown.

As described previously, in the event that the hydraulic pressure in the first actuator chamber 62 is less than the hydraulic pressure in the second actuator chamber 64, the pressure in the first pressure chamber 20 is less than the pressure in the second pressure chamber 22. This pressure differential causes a force to act on the inner spool 12 in the second direction. The pressure differential causes the inner spool 12 to translate in the second direction by an amount that is a function of the stiffness of the pressure differential spring 30 and hence of the resulting pressure differential spring force acting to oppose the pressure differential. Again, the inner spool 12, outer spool 14 and fluid transfer assembly 16 are configured such that in the event that the inner spool 12 translates over a threshold distance in the second distance (corresponding to another indexed position 58) fluid passageways are opened that place the first pressure chamber 20 and first actuator chamber 62 in fluid communication with the fluid return line 40.

The position sensor 33 may be configured to communicate pressure relief operations to a FCC or an operator or pilot. Repeated or consistent pressure relief operations may indicate a fault in the hydraulic system such as a malfunctioning servo valve 46 or a jammed inner spool 12. Such faults may cause the actuator 60 to undesirably act on a flight control surface 70. In such events, it may be desirable to bypass the actuator 60 such that the flight control surface 70 may be actuated by a redundant actuator, unimpeded by the faulty actuator 60.

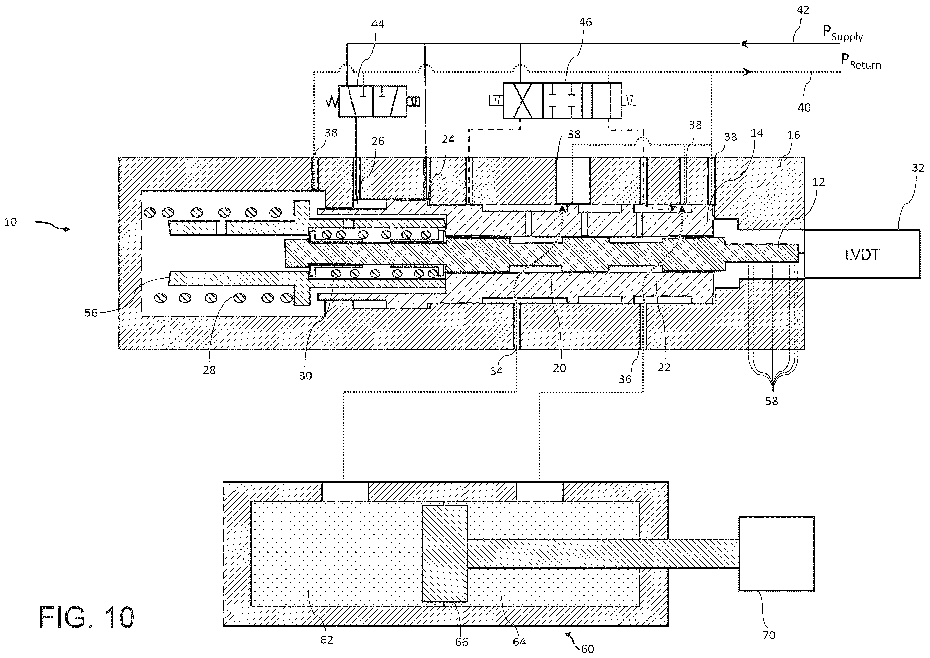

Figure 10 shows the valve 10 in the bypass mode with the solenoid valve 44 de-energized and the hydraulic system activated, i.e. the pressure of hydraulic fluid in the fluid supply line 42 is above a minimum operational threshold. With the solenoid valve 44 de-energised the fluid supply line 42 communicated to both the activation chamber 24 and the bypass chamber 26 resulting in a null pressure differential between the activation chamber 24 and the bypass chamber 26. Thus, the bypass mode can be entered on command by de-energizing the solenoid valve 44. In this configuration, the force provided by the bypass spring 28 overcomes the null pressure differential between the activation chamber 24 and the bypass chamber 26 so as to actuate the outer spool 14 in the first direction to the bypass position in which the valve 10 performs a bypass function. The bypass position corresponds to another indexed position 58 of the position sensor 32 (see also Figure 11).

When performing the bypass function the valve 10 is configured to place the first actuator chamber 62 and the second actuator chamber 64 in fluid communication with the fluid return line 40. The valve 10 may further communicate the first control pressure fluid and/or the second control pressure fluid from the servo valve 46 to the fluid return 40. In the example shown, the first servo port 50 is closed off and the second servo port 51 is communicated to the fluid return line 40 when in bypass mode.

The hydraulic system may utilise two (or more) parallel arrangement(s) of the components shown in Figure 3 to, by way of example, actuate and control a control surface. By having two actuators 60 acting on the same control surface 70, each with their own respective valve 10, redundancy is provided such that if one actuator 60, for example, were to fail the control surface may still be controlled, at least in part, by the other parallel arrangement. In such an instance, the failed actuator 60 will not hydraulically lock the flight control surface 70 if the actuator 60 is bypassed with the bypass function of the valve 10.

The valve 10 is configured to enter the bypass mode in the event that the hydraulic system is disabled with the solenoid valve 44 de-energized. The valve 10 enters the bypass mode in the event that the hydraulic pressure (e.g., P_{Supply}) in the hydraulic system decreases below a predetermined minimum pressure threshold regardless of whether the solenoid valve 44 is energized or de-energized. Thus, when hydraulic pressure in the system fails the hydraulic actuator 60 is automatically bypassed. The valve 10 is also configured to enter the bypass mode in the event that the solenoid valve 44 is de-energised or fails, providing a failsafe in the event of failure of the solenoid valve 44.

## Claims

1. A valve (10) for an actuator (60) of a flight control surface (70), the valve (10) comprising:
an inner spool (12) actuatable in a first direction and a second direction responsive to a first pressure differential between a first pressure chamber (20) and a second pressure chamber (22);
an outer spool (14) actuatable in the first direction and second direction between an active position and a bypass position, wherein the inner spool (12) is located within the outer spool (14);
an activation chamber (24) for receiving hydraulic fluid;
a bypass chamber (26) for receiving hydraulic fluid; and
a bypass spring (28),
wherein the outer spool (14) is actuatable based upon forces from the bypass spring (28) and a second pressure differential between the activation chamber (24) and the bypass chamber (26).

2. The valve according to claim 1, comprising a pressure differential spring (30) configured to bias the inner spool (12) towards an equilibrium position.

3. The valve according to claim 1 or 2, comprising a position sensor (33) configured to measure a position of the inner spool (12).

4. The valve according to any preceding claim, wherein the inner spool (12) is actuatable in the first direction to a first pressure relief position responsive to the first pressure differential exceeding a first threshold.

5. The valve according to any preceding claim, wherein the inner spool (12) is actuatable in the second direction to a second pressure relief position responsive to the first pressure differential exceeding a second threshold.

6. The valve according to any preceding claim, comprising a fluid transfer assembly (16), the fluid transfer assembly (16) comprising a first actuator port (34), a second actuator port (36) and one or more return ports (38), wherein, when the outer spool (14) is in the bypass position, the first actuator port (34) and second actuator port (36) are in fluid communication with the one or more return ports (38).

7. A hydraulic system for a flight control surface (70), comprising:
the valve (10) as claimed in any preceding claim, wherein the valve (10) is in fluid communication with a fluid return (40);
a hydraulic actuator (60) comprising a first actuator chamber (62) and a second actuator chamber (64),
wherein the inner spool (12) of the valve (10) is actuatable based upon an actuator pressure differential between the first actuator chamber (62) and the second actuator chamber (62).

8. The hydraulic system of claim 7, wherein, when the actuator pressure differential exceeds a predetermined threshold, the first actuator chamber (62) or the second actuator chamber (64) is in fluid communication with the fluid return (40).

9. The hydraulic system of claim 7 or 8, wherein, when the outer spool (14) is in the bypass position, the first actuator chamber (62) and the second actuator chamber (64) is in fluid communication with the fluid return (40).

10. The hydraulic system of claim 7, 8 or 9, comprising a solenoid valve (44) in fluid communication with the bypass chamber (26).

11. The hydraulic system of claim 10, wherein the activation chamber (24) is in fluid communication with a fluid supply (42) and the bypass chamber (26) is selectively in fluid communication with the fluid supply (40) or the fluid return (42) under the action of the solenoid valve (44).

12. A method of operating a valve (10) comprising:
actuating an outer spool (14) to an active position by supplying hydraulic fluid at a supply pressure greater than a predetermined activation pressure to an activation chamber (24) of the valve (10);
actuating an inner spool (12) in a first direction or a second direction responsive to a pressure differential between a first pressure chamber (20) and a second pressure chamber (22), wherein the inner spool (12) is located within the outer spool (14); and
actuating the outer spool (14) to a bypass position by supplying hydraulic fluid at the supply pressure to the activation chamber (24) and a bypass chamber (26) of the valve (10).

13. The method of claim 12, comprising measuring a position of the inner spool (12) and determining the pressure differential based on the measured position.

14. The method of claim 12 or 13, comprising actuating the inner spool (12) in the first direction to a first pressure relief position or in the second direction to a second pressure relief position responsive to the pressure differential exceeding a predetermined threshold.

15. The method of claim 12, 13 or 14, wherein actuating the outer spool (14) to the bypass position places the first pressure chamber (20) and the second pressure chamber (22) in fluid communication with a fluid return (40).
